(19) Europäisches Patentamt
European Patent Office
Office européen des brevets

(11) Veröffentlichungsnummer: **0 519 362 A1**

# (12) EUROPÄISCHE PATENTANMELDUNG

(21) Anmeldenummer: **92110005.3**

(51) Int. Cl.5: **C08F 20/14**

(22) Anmeldetag: **13.06.92**

(30) Priorität: **20.06.91 DE 4120312**

(43) Veröffentlichungstag der Anmeldung:
**23.12.92 Patentblatt 92/52**

(84) Benannte Vertragsstaaten:
**AT BE CH DE DK ES FR GB IT LI NL SE**

(71) Anmelder: **RÖHM GMBH**
**Kirschenallee**
**W-6100 Darmstadt(DE)**

(72) Erfinder: **Krieg, Manfred, Dr.**
**Kesselhutweg 19**
**W-6100 Darmstadt(DE)**

(54) **Verbessertes Verfahren zur Herstellung von Polymethylmethacrylat in Substanzpolymerisation.**

(57) Die Erfindung betrifft ein Verfahren zur Herstellung von weitgehend farblosem Polymethylmethacrylat unter den Bedingungen der Substanzpolymerisation in Anwesenheit einer Azoverbindung als Polymerisationsinitiator sowie gegebenenfalls von sauren oder basischen Agentien und gegebenenfalls vernetzenden Monomeren und Trennmitteln in den dafür üblichen Mengen, wobei als Initiator eine oder mehrere nitrilgruppenfreie Azoverbindungen eingesetzt werden.

EP 0 519 362 A1

## Gebiet der Erfindung

Die Erfindung betrifft ein verbessertes Verfahren zur Herstellung von Polymethylmethacrylat in Substanzpolymerisation insbesondere im Kammerverfahren unter Unterdrückung der Gelbfärbung.

## Stand der Technik

An Polymethylmethacrylat (PMMA) wurde von Anfang an besonders geschätzt, daß es als thermoplastischer Kunststoff Eigenschaften besaß, die man sonst nur von Mineralglas kannte, nämlich absolute Klarheit, Transparenz und Farblosigkeit. Bei reinem PMMA liegt der natürliche spektrale Extinktionsmodul K unter 1 x $10^{-4}$ $mm^{-1}$. Aus Lichtabsorptionsmessungen an PMMA kann geschlossen werden, daß die Lichtabsorption nicht allein substanzbedingt ist, sondern stark von den in Spuren und wechselnden Mengen vorliegenden Zusätzen, Verunreinigungen und Zersetzungsprodukten beeinflußt wird. (Vgl. Vieweg-Esser, Kunststoff-Handbuch, Bd. IX, S. 196, Carl Hauser Verlag 1975). Aus dieser und anderen Literaturstellen ist auch bekannt durch die Wahl bestimmter Verfahrensparameter das Verfahren und bis zu einem gewissen Grad auch die Qualität der Verfahrensprodukte zu beeinflussen. Während in früheren Jahren ausschließlich Benzoylperoxid als Initiator benutzt wurde, ging man später auf andere peroxidische Initiatoren wie z.B. aliphatische Diacylperoxide, Perester und Percarbonate über oder man verwendet Azoisobutyronitril (Vgl. Vieweg-Esser loc.cit. S. 17; US-A 3 113 114; US-A 2 471 959). In der letzteren Patentschrift wird auf verschiedene Nachteile hingewiesen, die beim Einsatz peroxidischer Initiatoren auftreten können, wie z.B. Verfärbung und Vernetzung der gebildeten Polymere als Folge von Oxidationsvorgängen. Die US-A 2 471 959 empfiehlt stattdessen die Anwendung von Azo-Initiatoren, wobei besonders auf die Farblosigkeit der so erhaltenen Produkte abgehoben wird. Gleichzeitig wird auf die Möglichkeit hingewiesen, Azo-Initiatoren im Zusammenhang der Telomerisation bei Polymermisationsvorgängen, also in Kombination mit kettenübertragenden Reagentien wie z.B. den Schwefelreglern anzuwenden. In der Übersichtsliteratur wird das 2,2'-Azoisobutyronitril (AIBN) als Initiator herausgestellt, der ab 35 Grad C in Stickstoff und zwei tert.-Butylnitril-Radikale zerfällt, die ihrerseits die Polymerisation der Monomeren auslösen um schließlich selbst in die Makromoleküle eingebaut zu werden. Es wird auch darauf hingewiesen, daß die Cyanoisopropylendgruppen aus dem AIBN vergleichsweise stabiler sind als die aus den Peroxyverbindungen stammenden Endgruppen wie z.B. die Benzoyloxygruppe. [Vgl. H. Rauch-Puntigam, Th. Völker, Acryl- und Methacrylverbindungen, S. 163, Springer-Verlag 1967)]. Erwähnt wird der Einsatz nitrilgruppenfreier Azoinitiatoren in Encyclopedia of Polymer Science & Technology 2nd Ed. Vol. II, S. 155.

## Aufgabe und Lösung

Bei der praktischen Durchführung der Substanzpolymerisation von Methylmethacrylat, gegebenenfalls zusammen mit weiteren Comonomeren außer MMA z. B. C1-C4-Alkylestern der (Meth)acrylsäure, (Meth)-acrylsäure, (Meth)acrylamid u.ä. und/oder z.B. vernetzenden Monomeren in Mengen unter 10 Gew.-% treten jedoch häufig Probleme auf, die sich nach dem Stand der Technik nicht schlüssig erklären ließen. Zunächst wird beobachtet, daß bei Verwendung sowohl des allgemein bevorzugten AIBN als auch des 2,2'-Azobis-(2,4-dimethylvaleronitrils) sehr starke Gelbfärbung eintritt, wogegen bei Anwendung von peroxidischen Initiatoren die Verfärbung auf ein tolerierbares Maß zurückgeht. In der Übersichtsliteratur wird allerdings auch ein Zusammenhang zwischen der Anwendung von Benzoylperoxid und der Verfärbung bei der Herstellung von PMMA und späterer Vergilbung hergestellt (vgl. C.E. Schildknecht, Polymerization Processes, Wiley-Interscience, pg. 40). Peroxidische Initiatoren haben im übrigen den großen Nachteil, daß sie Grenzflächenreaktionen begünstigen und so z.T. zu massiven Oberflächendefekten führen, so daß sich auch bei deren Anwendung keine voll befriedigende Lösung ergibt. Es bestand demnach die Aufgabe, die technischen Bedingungen der Substanzpolymerisation von MMA insbesondere nach dem Kammerverfahren so zu modifizieren, daß ein möglichst farbloses Produkt entsteht, das aber auch im übrigen Eigenschaftsspektrum den Anforderungen der Technik genügt.

Die Suche nach den Ursachen der Verfärbungen unter dem Einfluß der Azo-Initiatoren mußte sich zwangsläufig auf weitere Zusätze, Verunreinigungen und Zersetzungsprodukte konzentrieren, die den Aussagen im "Kunststoff-Handbuch" loc.cit. gemäß, die Lichtabsorption beeinflussen. Als Hilfsstoffe bzw. Zusätze oder sonstige Komponenten bei dem in Frage stehenden Polymerisationsverfahren sind neben dem Initiator insbesondere Trennmittel beispielsweise Phosphorsäureester wie das Di-2-ethylhexylphosphat und Vernetzer wie beispielsweise das Triallylcyanurat zu nennen. Im Interesse eines einwandfreien, verkaufsfähigen Produkts kann indessen bei der Substanzpolymerisation von PMMA in der Praxis derzeit auf solche Zuschläge kaum verzichtet werden. Die vorliegende Aufgabe sei somit anhand zweier typischer

Vertreter von Zusätzen, nämlich des Di-2-ethylhexylphosphats als Trennmittel sowie des Triallylcyanurats als Vernetzer näher betrachtet. Sofern einer der beiden Stoffe oder beide Stoffe in Kombination für die beobachtete starke Gelbfärbung verantwortlich waren - und dafür sprach z.B. die Tatsache, daß das Di-2-ethylhexylphosphat auch in Klebern zur Gelbfärbung führt - schien sich kein unmittelbar gangbarer Weg zur Vermeidung der Verfärbung anzubieten, wenn man nicht gleichzeitig eine Verschlechterung der sonstigen Produktqualität in Kauf nehmen wollte. Nicht von vorneherein vernachlässigbar war ferner ein etwaiger Einfluß von sauren oder basischen Agentien, die z.B. in Form von (Meth)acrylsäure oder Aminoalkyl(meth)-acrylat vorliegen können.

Es wurde nun gefunden, daß mit dem erfindungsgemäßen Verfahren unter den Bedingungen der Substanzpolymerisation insbesondere im Kammerverfahren (als sogen. "gegossenes Material") auch in Anwesenheit üblicher Trennmittel wie Di-2-ethylhexylphosphat und von Vernetzern wie Triallylcyanurat weitgehend farbloses Polymethylmethacrylat hergestellt werden kann, dessen übriges Eigenschaftsspektrum voll befriedigt.

Die vorliegende Erfindung betrifft somit ein Verfahren zur Herstellung von weitgehend farblosem Polymethylmethacrylat unter Copolymerisation des Methylmethacrylats den sonst üblichen Bedingungen der Substanzpolymerisation in Anwesenheit einer Azoverbindung als Polymerisationsinitiator in einem für die Initiierung ausreichenden Mengenbereich und gegebenenfalls in Gegenwart von sauren oder basischen Agentien und gegebenenfalls von Vernetzern wie Triallylcyanurat und Trennmitteln wie Di-2-ethylhexylphosphat, wobei als Initiatoren eine oder mehrere nitrilgruppenfreie Azoinitiatoren, insbesondere solche bei denen die Temperatur, bei der die Initiatormenge innerhalb 10 Stunden zur Hälfte zerfallen ist [10 h t 1/2 °C] im Bereich 65 ± 15 Grad C liegt, eingesetzt werden. (Vgl. H.F. Mark et al. Encyclopedia of Polymer Science & Technology $2^{nd}$ Ed. Vol. 11, pg. 2, J. Wiley & Sons) Die Bestimmung der Zerfallscharakteristika der Azo-Initiatoren kann in Anlehnung an C.G. Overberger et al. J. Am. Chem. Soc. 71, 2661 (1949) vorgenommen werden. Insbesondere handelt es sich um Azoinitiatoren der Formel I

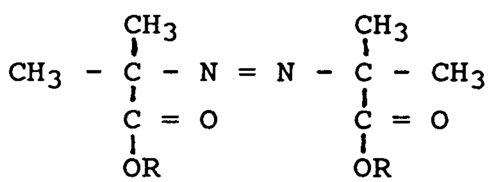

(I)

worin R für einen Alkylrest mit 1 bis 8 Kohlenstoffatomen, insbesondere einen Methyl- oder Ethylrest steht, ferner hydroxylgruppenhaltige Derivate wie Di-(2-Hydroxyethyl)-2,2'-azo-bis-isobutyrat, Di-(2-Hydroxypropyl)-2,2'-azo-bis-isobutyrat, desweiteren Azo-cumol-Verbindungen wie das 1,1'-Azo-bis-4-methylcumol und das 1,1'-Azo-bis-4-isopropylcumol, die in einem für die Initiierung ausreichenden Mengenbereich angewendet werden.

Im allgemeinen kommen die Azoinitiatoren der Formel (I) in Mengen von 0,01 bis 0,5 Gew.-%, inbesondere 0,02 bis 0,2 Gew.-% bezogen auf die Monomeren zur Anwendung. Die vorstehend genannten sauren oder basischen Agentien können in Form von sauren bzw. basischen Monomeren in den Polymerisationsansätzen vorhanden sein, sie können jedoch auch über die Polymerisationshilfsmittel bzw. sonstige Zuschläge Eingang in die Ansätze finden. Das erfindungsgemäße Verfahren erweist gerade in Fällen, wo eine Säuren- oder Basenkatalyse möglich ist, seine besondere Nützlichkeit.

Die Durchführung des erfindungsgemäßen Verfahrens kann in unmittelbarer Anlehnung an den Stand der Technik erfolgen. (Vgl. Ullmanns Encyclopädie der Techn. Chemie, 4. Bd. 19, S. 22 - 23 Verlag Chemie; H. Rauch-Puntigam, Th. Völker, Acryl- und Methacrylverbindungen S. 274 - 280, Springer-Verlag 1967; C.E. Schildknecht, Polymerization Processes loc.cit.). Azoinitiatoren, die den aufgestellten Kriterien genügen, und die zugehörigen Solventien, lassen sich z.B. dem "Polymer Handbook, Ed.J. Brandrup, E.H. Immergut $3^{rd}$ Ed. ab II/1, J. Wiley" entnehmen.

Als Monomeres wird Methylmethacrylat in der üblichen Reinheit in Mengen von gewöhnlich 80 - 100 Gew.-% bezogen auf die Gesamtheit angewendet. Als Comonomere kommen die gelegentlich für PMMA angewendeten infrage wie z.B. (Meth)acrylsäure, Acrylsäuremethylester, Acrylsäurebutylester, Styrol.

Insbesondere empfiehlt sich die Verwendung von anpolymerisierten Monomeren (Praepolymerisat), das beispielsweise ca. 5 Gew.-% Polymerisat enthalten kann. Die Polymerisationsansätze enthalten darüber hinaus noch die erfindungsgemäß einzusetzenden Initiatoren, insbesondere solche der Formel I, sowie häufig Vernetzer, speziell Triallylcyanurat und Trennmittel, speziell Di-2-ethylhexylphosphat, sowie gegebenenfalls Weichmacher wie Phthalsäureester, Stabilisatoren wie sterisch gehinderte Phenole, HALS-Produkte

(Hindered amine light stabilizers, vgl. US-A 4 593 064), UV-Absorber wie z.B. Benztriazole, wie etwa 2-(2-Hydroxy-5-methyl-phenyl)-2H-benztriazol u.ä. (Vgl. R. Gächter und H. Müller, Kunststoff-Additive, Hanser-Verlag 1979).

Vorteilhaft werden beim Kammerverfahren Gußformen aus Silikatglas- (z.B. 8 mm Floatglas) verwendet, die mit einer am Rand umlaufenden Dichtschnur (z.B. Kunststoffprofil beispielsweise aus PVC) distanziert und abgedichtet sind. Die auf diese Weise erhaltenen Flachkammern werden unter einem gewissen Druck z.B. mittels Klammern zusammengehalten. Die Randabdichtungen müssen kompressibel sein, um der während der Polymerisation eintretenden Volumkontraktion (Schrumpf) folgen zu können, so daß keine Ablösung des Polymerisats von den Glasoberflächen eintritt.

Man geht in der Regel so vor, daß man die zu polymerisierende, zweckmäßig die genannten Hilfsstoffe enthaltende Methylmethacrylatlösung in die an drei Seiten dicht verschlossene, gegebenenfalls evakuierte Form von der noch offenen vierten Seite her verfüllt.

Gewöhnlich wird die Polymerisation in einer Anordnung der Kammern durchgeführt, welche die Temperaturkontrolle bzw. Wärmeabfuhr gewährleistet. So können die - etwa horizontal in Gestellen liegenden Kammern beispielsweise in Heißluftöfen mit hoher Luftgeschwindigkeit, in Autoklaven unter Anwendung von Sprühwasser oder in wassergefüllten Becken unter Polymerisationsbedingungen gehalten werden. Die Polymerisation wird durch Erwärmen in Gang gebracht. Zur Abführung der beträchtlichen Polymerisationswärme, speziell im Gel-Bereich ist gezieltes Kühlen notwendig. Die Polymerisationstemperaturen liegen üblicherweise zwischen ca. 15 Grad C und ca. 70 Grad C bei Normaldruck.

Im Autoklaven betragen sie zweckmäßig ca. 90 - 100 Grad C. Die Verweilzeit variiert entsprechend der Art und Weise des Polymerisationsansatzes und der Durchführung zwischen wenigen Stunden und einigen Tagen.

Im Interesse einer möglichst weitgehenden Umsetzung (> 99 %) sollte die Temperatur gegen Ende des Polymerisationsvorgangs noch einmal für kurze Zeit erhöht werden, beispielsweise auf über 100 Grad C, etwa auf ca. 120 Grad C.

Man läßt zweckmäßigerweise langsam abkühlen, wobei sich die Polymerisatplatten von den Glasplatten trennen und entnommen werden können.

## BEISPIELE

### Beispiel 1

Eine Mischung aus 0,05 Teilen 2-(2-Hydroxy-5-methylphenyl)-2H-benzo-triazol, 0,8 Teilen Di-2-ethylhexylphosphat, 0,75 Teilen Triallylcyanurat, 0,1 Teilen Dimethyl-2,2'-azobisisobutyrat und 98,3 Teilen Methylmethacrylat wird, wie bei gegossenem Acrylglas üblich, in eine 6 mm distanzierte Silikatglaskammer gefüllt und ca. 24 Stunden bei 40°C polymerisiert. Die Endpolymerisation erfolgt in einem Temperschrank 6 Stunden bei 115°C.

Nach dem Abkühlen und Entformen wird eine fast farblose Acrylglasplatte erhalten, die auch nach Temperung zur Umformung bei 160°C ihre Farbe kaum ändert. In Analogie zu Beispiel 1 können auch MMA-Copolymerisate gewöhnlich mit Anteilen von weniger als 10 Gew.-% an gebräuchlichen Comonomeren wie Methylacrylat, Ethylacrylat und -methacrylat, Butylacrylat und -methacrylat, Ethylhexylacrylat und -methacrylat, Phenylacrylat und -methacrylat, gegebenenfalls substituiertes Acrylamid und -methacrylamid, Styrol und seine Derivate, erfindungsgemäß hergestellt werden. Ferner ergeben sich analoge Resultate bei Verwendung der homologen $C_2$-$C_8$-Alkylester der 2,2'-Azo-bis-isobuttersäure, insbesondere beim Diethylester sowie mit Di-2-(Hydroxyethyl)-2,2'-azo-bis-isobutyrat, Di-2-(Hydroxypropyl)-2,2'-azo-bis-isobutyrat sowie mit 1,1'-Azobis-methylcumol und 1,1'-Azo-bis-4-isopropylcumol.

### Beispiel 2

Eine Mischung analog Beispiel 1, bei der lediglich der Initiator Dimethyl-2,2'-azobisisobutyrat durch 0,1 Teile 2,2'-Azo-bisisobutyronitril ersetzt ist, führt nach Polymerisation zu einer deutlich gelb gefärbten Platte, deren Farbton sich nach Temperung bei 160°C noch merklich vertieft.

## Patentansprüche

1. Verfahren zur Herstellung von weitgehend farblosem Polymethylmethacrylat und Copolymerisaten des Methylmethacrylats unter den sonst üblichen Bedingungen der Substanzpolymerisation in Anwesenheit einer Azoverbindung als Polymerisationsinitiator in einem für die Initiierung ausreichenden Mengenbereich sowie gegebenenfalls von sauren oder basischen Agentien und gegebenenfalls vernetzenden Monomeren und Trennmitteln in den dafür üblichen Mengen,

dadurch gekennzeichnet,

daß als Initiator eine oder mehrere nitrilgruppenfreie Azoverbindungen eingesetzt werden.

2. Verfahren gemäß Anspruch 1, dadurch gekennzeichnet, daß als Initiator eine nitrilgruppenfreie Azoverbindung eingesetzt wird, für die gilt, daß die Temperatur, bei der der Initiator in 0,1 n Lösung innerhalb 10 Stunden zur Hälfte zerfallen ist (10 h-t 1/2) im Bereich 65 $^{+}$ 15°C liegt.

3. Verfahren gemäß Anspruch 1, dadurch gekennzeichnet, daß als Initiator eine nitrilgruppenfreie Azoverbindung der Formel (I)

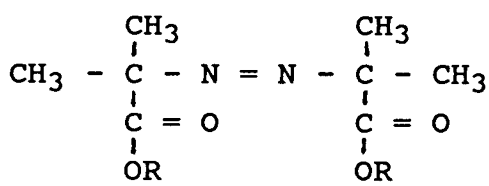

(I)

worin R für einen Alkylrest mit 1 bis 8 Kohlenstoffatomen steht, oder hydroxylgruppenhaltige Derivate derselben, oder 1,1'-Azo-bis-4-methylcumol oder 1,1'-Azo-bis-4-isopropylcumol eingesetzt wird.

4. Verfahren gemäß den Ansprüchen 1 und 3, dadurch gekennzeichnet, daß als Vernetzer ein solcher aus der Gruppe gebildet aus Triallylisocyanurat, Triallylcyanurat eingesetzt wird.

5. Verfahren gemäß den Ansprüchen 1 und 3, dadurch gekennzeichnet, daß als Trennmittel ein saurer Phosphorsäureester eingesetzt wird.

6. Verfahren gemäß Anspruch 5, dadurch gekennzeichnet, daß als Trennmittel Di-2-ethylhexylphosphat eingesetzt wird.

Europäisches Patentamt

# EUROPÄISCHER RECHERCHENBERICHT

Nummer der Anmeldung

EP 92 11 0005

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-2 520 339 (J.A. ROBERTSON)<br>* Anspruch 1 *<br>* Spalte 4, Zeile 1 - Spalte 4, Zeile 9 *<br>* Spalte 3, Zeile 46 - Spalte 3, Zeile 61 *<br>--- | 1,2,4 | C08F20/14 |
| X | US-A-3 306 888 (G.A.MORTIMER)<br>* Anspruch 1 *<br>* Spalte 6, Zeile 3 - Spalte 6, Zeile 15 *<br>* Spalte 7, Zeile 47 - Spalte 7, Zeile 49 *<br>--- | 1,2,4 | |
| X | DE-A-2 630 996 (LUPEROX GMBH)<br>* Anspruch 1 *<br>* Seite 9, Zeile 5 - Seite 9, Zeile 15 *<br>--- | 1,2,4 | |
| X | DE-A-2 254 572 (BAYER AG)<br>* Anspruch 1 *<br>----- | 3 | |
| | | | RECHERCHIERTE SACHGEBIETE (Int. Cl.5 ) |
| | | | C08F |

Der vorliegende Recherchenbericht wurde für alle Patentansprüche erstellt

| Recherchenort | Abschlußdatum der Recherche | Prüfer |
|---|---|---|
| DEN HAAG | 22 SEPTEMBER 1992 | CAUWENBERG C.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)